Europäisches Patentamt

European Patent Office

Office européen des brevets

(11) Veröffentlichungsnummer: **0 061 153**

**A1**

## (12) EUROPÄISCHE PATENTANMELDUNG

(21) Anmeldenummer: **82102208.4**

(22) Anmeldetag: **18.03.82**

(51) Int. Cl.³: **B 25 J 9/00**

(30) Priorität: **25.03.81 DE 3111624**

(43) Veröffentlichungstag der Anmeldung:
**29.09.82 Patentblatt 82/39**

(84) Benannte Vertragsstaaten:
**AT BE CH FR GB IT LI NL SE**

(71) Anmelder: **Richter, Hans**
**Ortlerstrasse 77**
**D-8900 Augsburg(DE)**

(72) Erfinder: **Richter, Hans**
**Ortlerstrasse 77**
**D-8900 Augsburg(DE)**

(74) Vertreter: **Charrier, Rolf, Dipl.-Ing.**
**Postfach 260 Rehlingenstrasse 8**
**D-8900 Augsburg 31(DE)**

(54) Industrieroboter.

(57) Um einen Industrieroboter den unterschiedlichen Einsatzbedingungen anpassen zu können, ist ein Grundaufbau, bestehend aus einem Gestell 1, einem Schwenkarm 5 und zwei Hebelarmen 2, 6 vorgesehen, der mit an die Einsatzbedingungen angepassten Baugruppen kombinierbar ist. Soll der Roboter horizontale Bewegungen mit seinem Baumende ausführen, wird der Grundaufbau kombiniert mit einem Verstellmotor 12 den ersten Hebelarm 2 und einem Distanzarm 26 für den Schwenkarm 5. Soll der Roboter vertikale Bewegungen mit seinem Baumende ausführen, wird der Grundaufbau kombiniert mit einem Verstellmotor 15 für den Schwenkarm 5 und einem Distanzarm 29 für den ersten Hebelarm 2.

./...

FIG.1

0061153

Dipl.-Ing.

*Rolf Charrier*

Patentanwalt

Rehlingenstraße 8 · Postfach 260
D-8900 Augsburg 31
Telefon 08 21/3 60 15 + 3 60 16
Telex 53 3 275
Postscheckkonto. München Nr 1547 89-801

8398/32/ch-cv                                    Augsburg, den 17. März 1982


            Hans Richter
            Ortlerstr. 77
            D-8900 Augsburg


            "Industrieroboter"


Die Erfindung betrifft einen Industrieroboter mit einem
Gestell, das mindestens einen ersten Hebelarm schwenkbar
lagert, im Abstand von dessen Schwenkachse ein Schwenkarm gelagert ist, der etwa rechtwinklig zum ersten Hebelarm verläuft und einen zweiten Hebelarm lagert, der etwa
parallel zum ersten Hebelarm verläuft und beide Hebelarme einen Baum lagern, an dessen Ende ein Handgerät anbringbar ist.

Ein derartiger Industrieroboter weist den Vortiel auf,
daß das Ende des Baums, an dem ein Handgerät anbringbar
ist, in einem relativ großen Arbeitsfeld nahezu horizontale
Bewegungen ausführt, wenn der erste Hebelarm verschwenkt
wird und nahezu vertikale Bewegungen ausführt, wenn der
Schwenkarm verschwenkt wird. Außerdem ist das Handgerät
in mehreren Achsen beweglich. Letztlich ist das Gestell
auf einem Drehgestell angeordnet, wodurch der Roboter
insgesamt um eine weitere Achse drehbar ist.

Ein derartiger Roboter ist in der Lage, praktisch alle an
ihn gestellten Aufgaben aufgrund seiner Beweglichkeit zu

                                            --2--

erfüllen. Für bestimmte Einsatzgebiete jedoch genügt
eine begrenzte Beweglichkeit des Roboters. Beispielsweise genügt es für bestimmte Aufgaben, wenn das Ende
des Baumes nur horizontale Bewegungen ausführt. In diesem
Fall könnte dann der Antrieb des Schwenkarms entfallen.
Genügt es, wenn der Roboter zur Bewältigung einer bestimmten Aufgabe im Wesentlichen nur vertikale Bewegungen
mit seinem Baumende ausführt, dann ist der Antrieb des
ersten Hebelarms entbehrlich. Für bestimmte Einsatzzwecke, wie beispielsweise beim Schweißen, ist es entbehrlich, daß das Handgerät eine Bewegungsmöglichkeit
in drei Achsen aufweist. In einem solchen Fall könnte
dann das Handgerät mit seinen Antrieben entfallen.

Wird für die vorgenannten Einsatzzwecke der eingangs
erwähnte Industrieroboter eingesetzt, dann ist sein Aufbau komplexer, als wie zur Erfüllung seiner Aufgaben
bei den speziellen Einsatzbedingungen nötig wäre.

Es besteht daher die Aufgabe, den eingangs genannten
Industrieroboter so auszubilden, daß er durch Verwendung
verschiedener Baugruppen den unterschiedlichen Einsatzbedingungen leicht anpassbar ist.

Gelöst wird diese Aufgabe mit den Merkmalen des Anspruches
1. Vorteilhafte Ausgestaltungen sind den Unteransprüchen
entnehmbar.

Verschiedene Ausführungsbeispiele sind auf den Zeichnungen
dargestellt. Es zeigen:

        Fig. 1  die Seitenansicht eines Industrieroboters mit einer maximal möglichen
                Achsenbeweglichkeit ;

Fig. 2 den Industrieroboter nach Fig. 1
      bei festgelegtem Schwenkarm;

Fig. 3 den gleichen Industrieroboter
      bei festgelegtem ersten Hebelarm;

Fig. 4 den Industrieroboter mit vereinfachtem Baum;

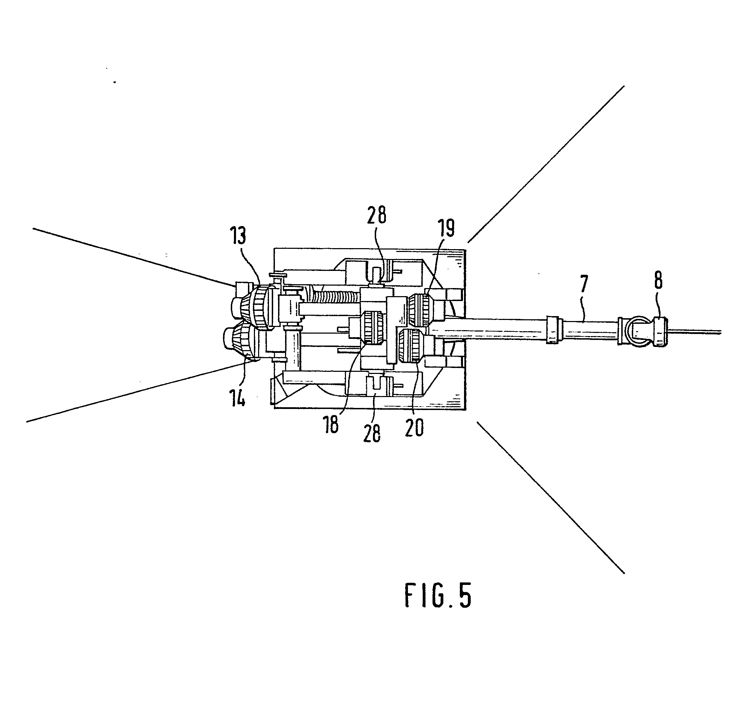

Fig. 5 eine Draufsicht auf den Roboter nach

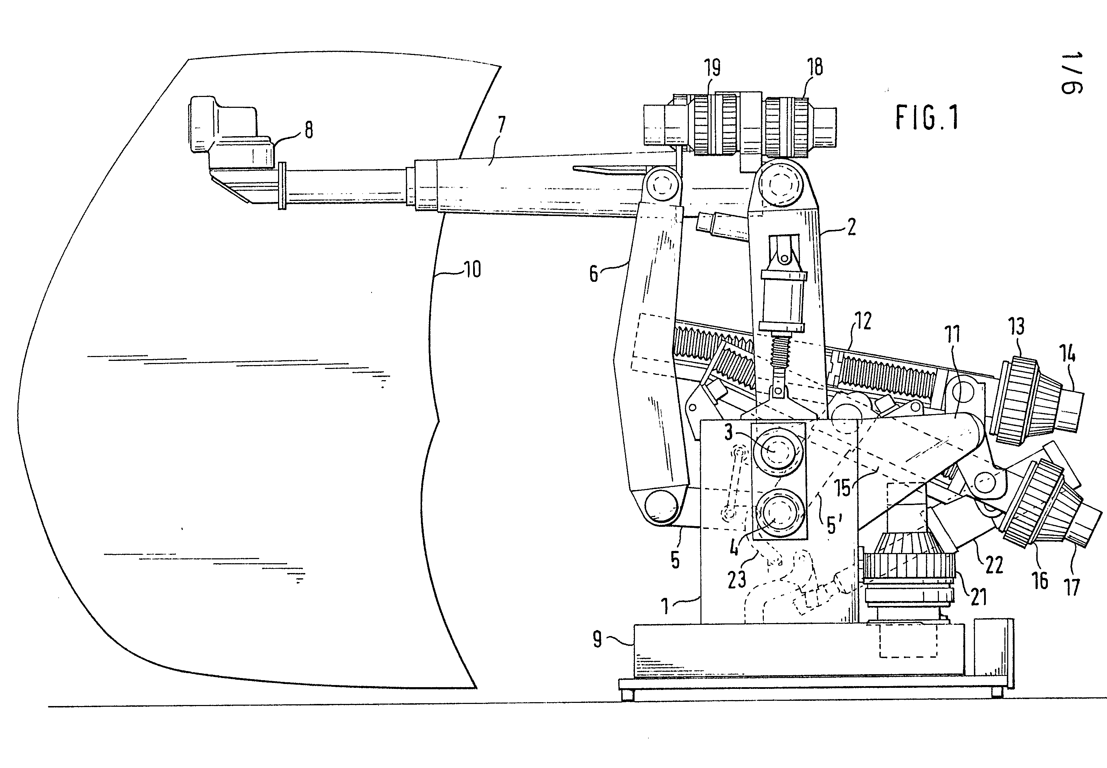

      Fig. 1 und

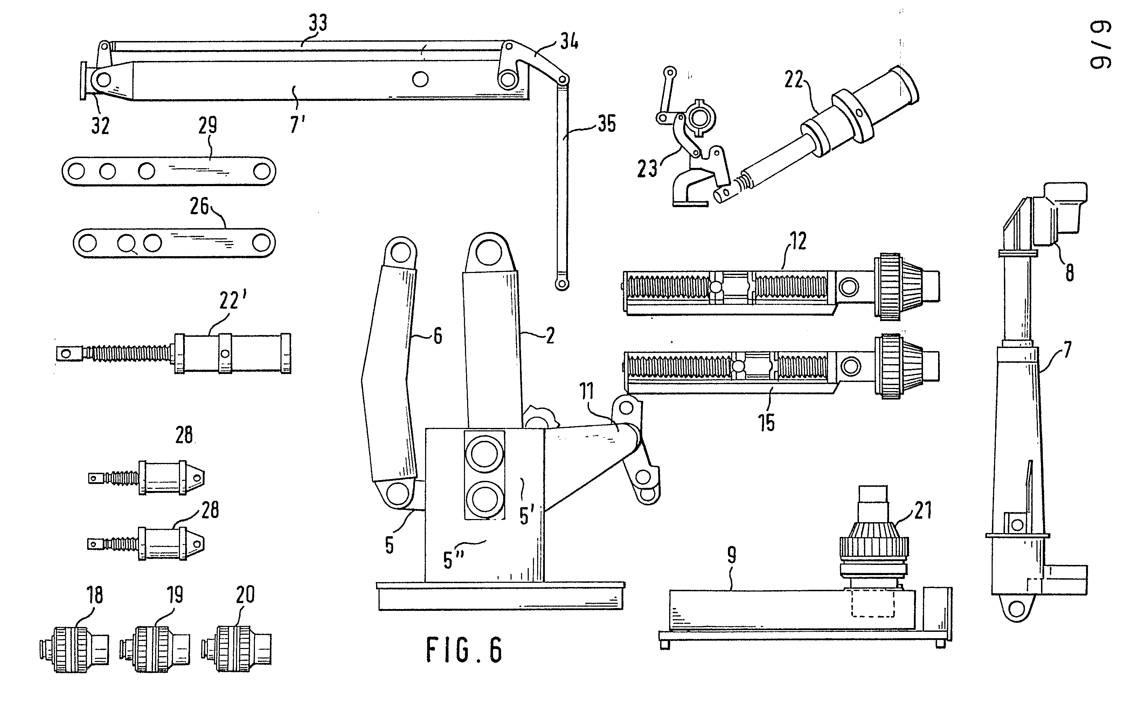

Fig. 6 eine Darstellung der einzelnen verwendeten Baugruppen.

Der in Fig. 1 dargestellte Industrieroboter weist die optimalen Einsatzmöglichkeiten auf. Er besteht aus einem Gestell 1, an welchem ein erster Hebelarm 2 um die Achse 3 schwenkbar gelagert ist. Im Abstand zur Achse 3 ist um die Achse 4 schwenkbar ein Schwenkarm 5 gelagert. Dieser Schwenkarm 5 lagert einen zweiten Hebelarm 6, welcher etwa parallel zum ersten Hebelarm 2 verläuft. Die beiden Hebelarme 2,6 lagern einen Baum 7, welcher an seinem vorderen Ende ein Handgerät 8 trägt. Das Gestell 1 wird gelagert von einem Drehgestell 9.

Der Arbeitsbereich des Roboters ist mit 10 bezeichnet.

Zwischen dem ersten Hebelarm 2 und einer Verlängerung 11 des Gestells 1 ist ein erster Verstellmotor 12 vorgesehen. Dieser Verstellmotor 12 weist einen Elektromotor 13 auf, der am rückwärtigen Ende ein Wegmeßsystem 14 trägt. Wird dieser Verstellmotor 12 betätigt, dann führt das Handgerät 8 im Arbeitsfeld 10 im Wesentlichen
horizontale Bewegungen aus.

Zwischen einer Verlängerung 5' des Schwenkarmes 5 und
der Verlängerung 11 des Gestells 1 ist ein zweiter Verstellmotor 15 vorgesehen, der einen Elektromotor 16 und
ein Wegmeßsystem 17 aufweist. Wird dieser Verstellmotor
15 betätigt, dann führt das Handgerät 8 im Arbeitsfeld
10 im Wesentlichen vertikale Bewegungen aus.

Am rückwärtigen Ende des Baumes 7 sind drei Motoren
18,19,20 vorgesehen, welche jeweils mit einem Wegmeßsystem verbunden sind und welche zum Betätigen des Handgeräts 8 in insgesamt drei Achsen dienen.

Bei einer Betätigung des Motors 21 des Drehgestells 9
kann das Gestell 1 insgesamt gedreht werden.

Zwischen der Verlängerung 11, dem Schwenkarm 5 und dem
ersten Hebelarm 2 ist ein Gewichtsausgleichszylinder 22
mit Gestänge 23 vorgesehen. Das gezeigte Gestänge 23 dient
zum Gewichtsausgleich des Gewichts des Baumes 7 des Handgeräts 8 und der vom Handgerät 8 getragenen Last. Das
in Fig. 1 gezeigte Gestänge 23 ist zum Gewichtsausgleich
geeignet, wenn der Roboter in einer Lage betrieben wird,
bei welcher die Drehachse des Drehgestells 9 horizontal
verläuft, d.h. wenn der Roboter an einer vertikalen
Wand 24 befestigt ist. Durch die Gewichtsausgleichsvorrichtung 22,23 wird erreicht, daß die Verstellmotoren
12,15 keine Gewichtskräfte zu überwinden haben sondern
lediglich die bei der Verstellung auftretenden Trägheitskräfte zu überwinden haben.

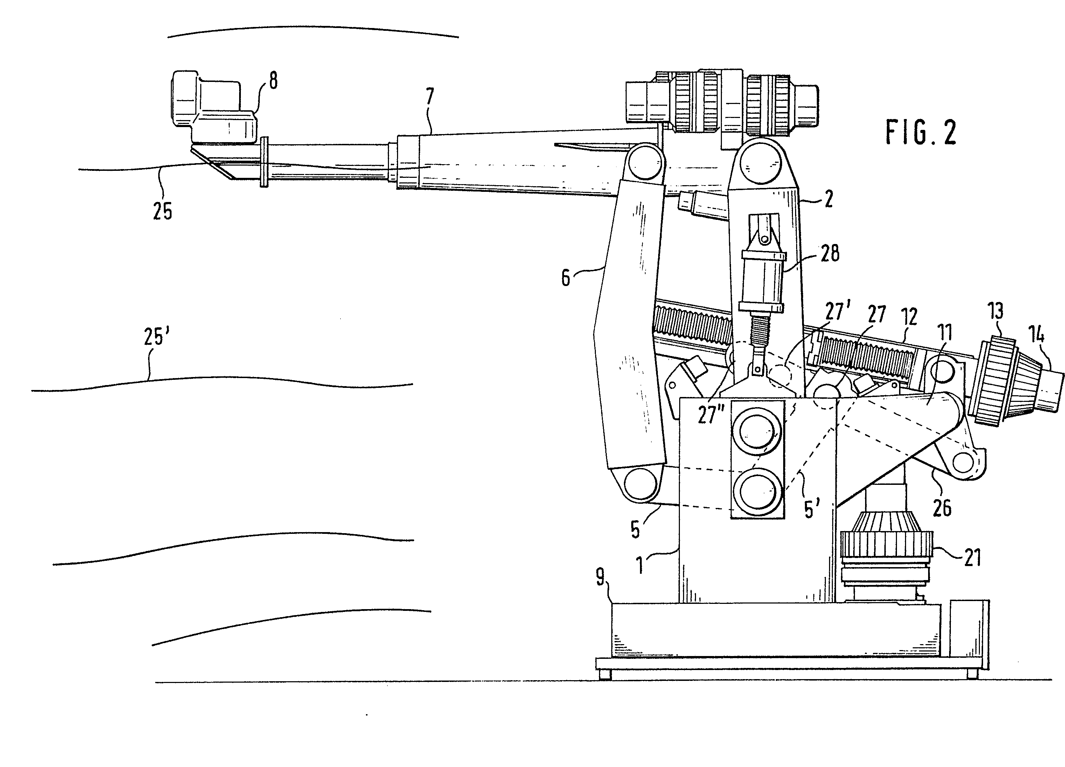

Bei der Ausführung nach Fig. 2 ist die Anordnung so getroffen, daß das Handgerät 8 im Arbeitsfeld im Wesentlichen nur horizontale Bewegungen 25 ausführt. In einem
solchen Fall kann der Verstellmotor 15 entfallen. Anstelle des Verstellmotors 15 ist zwischen der Verlängerung
11 des Gestells 1 und der Verlängerung 5' des Schwenkarmes 5 ein Distanzarm 26 vorgesehen. Dieser erste Distanzarm weist verschiedene Bohrungen 27, 27', 27'' auf,
wodurch bewirkt wird, daß die wirksame Länge des Distanzarms 26 unterschiedlich gewählt werden kann, entsprechend der Höhe, in welcher sich das Handgerät 8 bewegen soll.

Da der Schwenkarm 5 und der zweite Hebelarm 6 nunmehr
starr festliegen, ist über sie kein Gewichtsausgleich
mehr möglich. Anstelle des anhand der Fig. 1 beschriebenen
Gewichtsausgleichs sind nunmhr beidseits des ersten
Hebelarmes 2 zwei Gewichtsausgleichszylinder 28 zwischen
dem Gestell 1 und dem Hebelarm 2 vorgesehen.

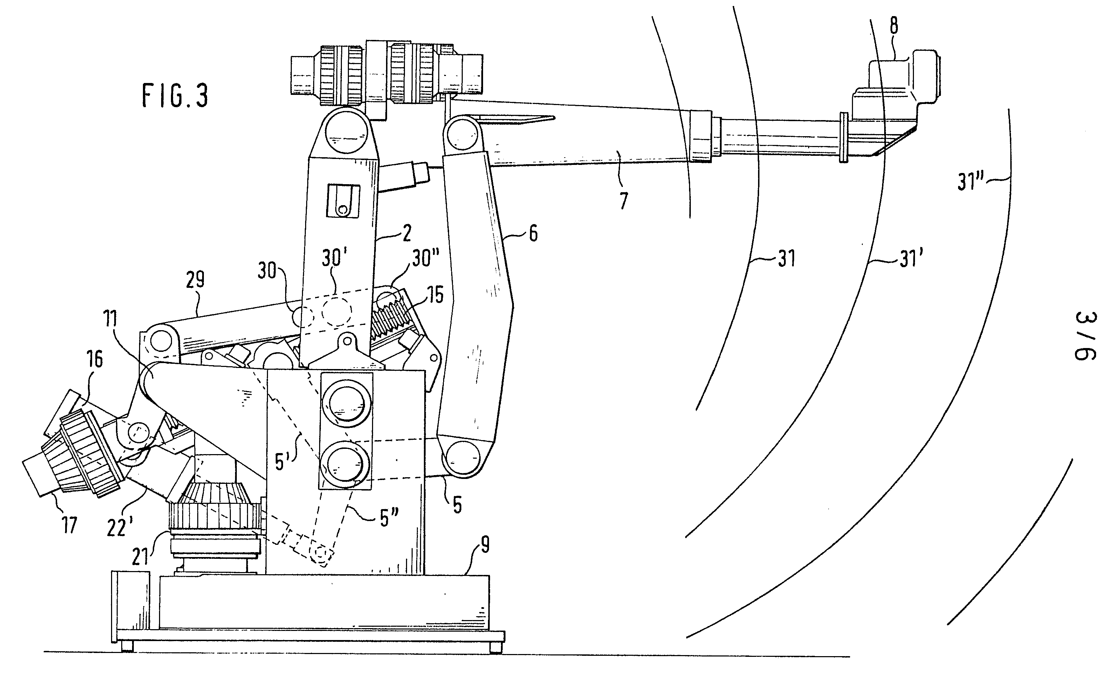

Die Ausführungsform nach Fig. 3 dient dazu, daß das
Handgerät 8 im Arbeitsfeld im Wesentlichen nur vertikale Bewegungen ausführt. In einem solchen Fall kann
der Verstellmotor 12 entfallen. Dieser Verstellmotor
12 ist in dem gezeigten Ausführungsbeispiel ersetzt durch
einen weiteren Distanzarm 29. Dieser Distanzarm 29 ist
angeordnet zwischen der Verlängerung 11 des Gestells 1
und den ersten Hebelarm 2. Durch die Bohrungen 30,30', 30''
ist der Hebelarm 2 in verschiedenen Winkelstellungen
festlegbar, entsprechend der Vertikalbewegung 31,31',31''
welche das Handgerät 8 ausführen soll. Bei dem in Fig.
3 gezeigten Ausführungsbeispiel ist wie in Fig. 2 vorgesehen, daß sich das Gestell 1 im Drehgestell 9 um eine
vertikale Achse zu drehen vermag. Zum Gewichtsausgleich
dient diesesmal ein Gewichtsausgleichzylinder 22, welcher
an einer Verlängerung 5'' des Schwenkarmes 5 angreift.

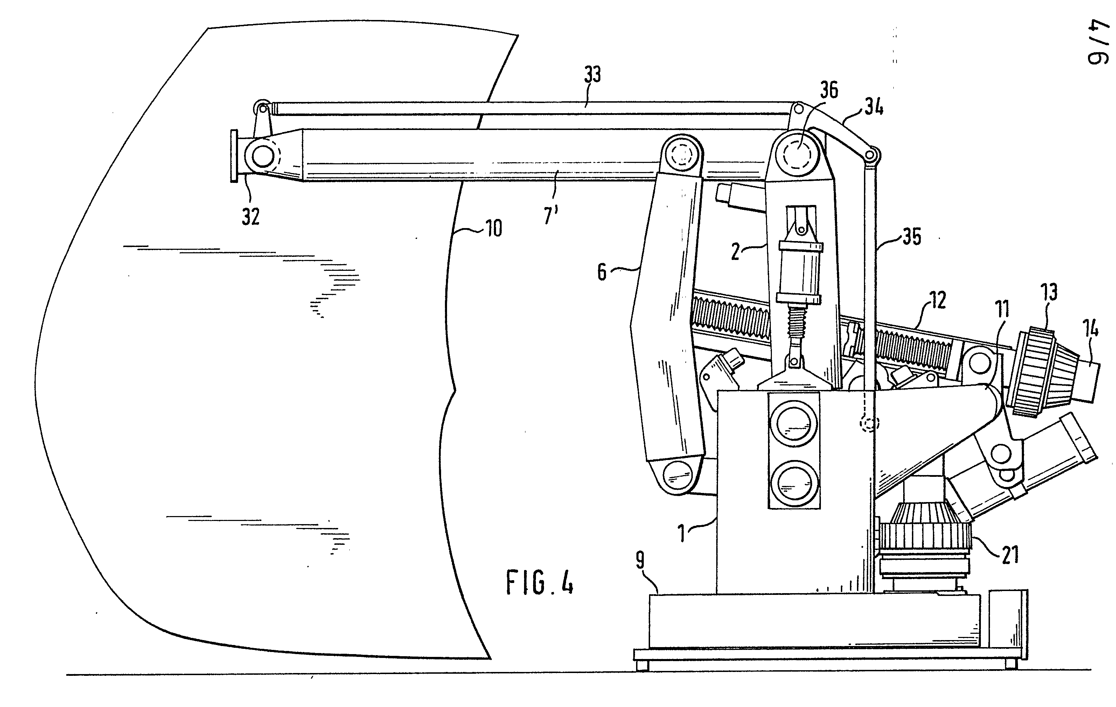

Beim Ausführungsbeispiel nach Fig. 4 ist das Einsatzgebiet
derart, daß ein Handgerät entfallen kann. Es besteht
lediglich die Forderung, daß der Handflansch 32 im
gesamten Arbeitsfeld 10 stets eine horizontale Lage
einnimmt. Zur Darstellung nach Fig. 4 ist anzumerken,
daß der Verstellmotor 15 nicht dargestellt ist, jedoch
vorhanden ist, wenn das Arbeitsfeld 10 bestrichen werden
soll.

Der Baum 7' nach Fig. 4 weist keine Verstellmotoren
18,19,20 für das Handgerät 8 auf. Am Handflansch 32
greift ein Gestänge 33,34,35 an, wobei der Gestängeteil
35 am Gestell 1 befestigt ist und der Gestängeteil 34
um die Achse 36 schwenkbar ist, bei der es sich um
die Achse zwischen dem ersten Hebelarm 2 und dem Baum 7'
handelt.

In Fig. 6 sind die einzelnen Baugruppen dargestellt.
Der Grundaufbau des Roboters besteht hierbei aus dem
Gestell 1, den beiden Hebelarmen 2,6, dem Schwenkarm
5 mit seinen beiden Verlängerungen 5' und 5'' und dem
Fundamentsockel 37. Mit diesem Fundamentsockel 37 kann
der Grundaufbau direkt am Boden oder einer Wand befestigt werden oder er ist einsetzbar in das Drehgestell 9. Mit diesem Grundaufbau können alle übrigen Baugruppen kombiniert werden.

0061153

Dipl.-Ing.

*Rolf Charrier*

Patentanwalt

Rehlingenstraße 8 · Postfach 260
D-8900 Augsburg 31
Telefon 08 21/3 60 15 + 3 60 16
Telex 533 275
Postscheckkonto München Nr. 1547 89-801
8398/32/ch-cv

Anm.: Hans Richter
Augsburg, den 17. März 1982

Ansprüche

1. Industrieroboter mit einem Gestell, das mindestens
   einen ersten Hebelarm schwenkbar lagert, im Abstand
   von dessen Schwenkachse ein Schwenkarm gelagert ist,
   der etwa rechtwinklig zum ersten Hebelarm verläuft und
   einen zweiten Hebelarm lagert, der etwa parallel zum
   ersten Hebelarm verläuft und beide Hebelarme einen
   Baum lagern, an dessen Ende ein Handgerät anbringbar
   ist, dadurch g e k e n n z e i c h n e t , daß
   zwischen dem Schwenkarm (5) oder dem ersten Hebelarm (2) und dem Gestell (1) wahlweise ein Verstellmotor (12,15) oder ein Distanzarm (26,29) angeordnet sind.

2. Roboter nach Anspruch 1, dadurch g e k e n n -
   z e i c h n e t , daß bei zwischen Schwenkarm (5)
   und Gestell (1) angeordnetem Distanzarm (26) zwischen
   dem Gestell (1) und dem ersten Hebelarm (2) mindestens
   ein Gewichtsausgleichsmotor (28) angeordnet ist.

3. Roboter nach Anspruch 1, dadurch g e k e n n -
   z e i c h n e t , daß bei zwischen erstem Hebelarm (2) und Gestell (1) angeordnetem Distanzarm
   (29) zwischen dem Gestell (1) und dem Schwenkarm (5)
   ein Gewichtsausgleichsmotor (22) angeordnet ist.

4. Roboter nach einem der Ansprüche 1 bis 3, dadurch g e -
   k e n n z e i c h n e t , daß am Flansch (32) für das Handgerät (8) ein Gestänge (33,34,35) angreift, das etwa
parallel zum Baum (7') und zum ersten Hebelarm (2) verläuft, am Gestell (1) schwenkbar befestigt ist und der Gelenkpunkt der beiden Gestängeteile (33,35) um die Schwenkachse (36) zwischen Baum (7')und ersten Hebelarm (2)
drehbar ist.

5. Roboter nach einem der Ansprüche 1 bis 4, dadurch g e -
k e n n z e i c h n e t , daß das Gestell (1) drehbar
auf einem Drehgestell (9) angeordnet ist.

6. Roboter nach Anspruch 5, dadurch g e k e n n z e i c h -
n e t , daß das Gestell (1) einen Fundamentsockel (37)
aufweist.

7. Roboter nach Anspruch 1, dadurch g e k e n n z e i c h -
n e t , daß am rückwärtigen Baumende die Motoren (18,19,
20) für die Betätigung des Handgeräts (8) angebracht sind.

8. Roboter nach Anspruch 1, dadurch g e k e n n z e i c h -
n e t , daß Wegmeßsysteme (14,17) am rückwärtigen Motorenende angebracht sind.

9. Roboter nach einem der Ansprüche 1 bis 8, dadurch g e -
k e n n z e i c h n e t , daß er einen aus Gestell (1),
Schwenkarm (5) und Hebelarmen (2,6) bestehenden Grundaufbau
aufweist.

10. Roboter nach Anspruch 9, dadurch g e k e n n z e i c h -
n e t , daß mit dem Grundaufbau kombinierbar sind ein
Verstellmotor (12) für den ersten Hebelarm (2) und ein
Distanzarm (26) für den Schwenkarm (5) oder ein Verstellmotor (15) für den Schwenkarm (5) und ein Distanzarm (29)
für den ersten Hebelarm (2).

11. Roboter nach Anspruch 9 oder 10, dadurch g e -
k e n n z e i c h n e t , daß mit dem Grundaufbau kombinierbar ist entweder ein Baum (7) mit einem
Handgerät (8) und Verstellmotoren (18,19,20) oder ein
Baum (7') mit durch ein Gestänge (33,34,35) horizontal geführtem Handflansch (32).

12. Roboter nach Anspruch 9, dadurch g e k e n n z e i c h -
n e ·t , daß bei auf horizontaler Unterlage angeordnetem
Gestell (1) der Grundaufbau kombinierbar ist mit einer
auf den Schwenkarm (5) wirkenden Gewichtsausgleichsvorrichtung (22') und bei auf horizontaler Unterlage
angeordnetem Gestell (1) der Grundaufbau mit einer auf
den ersten Hebelarm (2) wirkenden Gewichtsausgleichsvorrichtung (22,23) kombinierbar ist.

FIG.1

1/6

0061153

0061153

FIG. 2

FIG.3

0061153

FIG. 4

28  19

13

7  8

14

18  28  20

FIG.5

0061153

FIG.6

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 630 389 (SCHMIDT et al.)<br>* Spalte 2, Zeile 59 - Spalte 3, Zeile 44 *<br>--- | 1,4-6 | B 25 J 9/00 |
| Y | DE-A-2 301 423 (FISHER BRODBECK)<br>* Seite 14, Zeile 23 - Seite 15, Zeile 8; Anspruch 1 *<br>--- | 1 | |
| X,P | DE-A-3 038 419 (HITACHI)<br>* Ansprüche 1,4 *<br>--- | 1,4 | |
| A | DE-A-2 628 734 (SHIROYAMA KOGYO)<br>* Figuren 1,2 *<br>--- | 4 | |
| A | DE-A-2 452 345 (VOLKSWAGENWERK)<br>* Seite 10, Zeile 11 - Seite 11, Zeile 5 *<br>--- | 7 | RECHERCHIERTE SACHGEBIETE (Int. Cl. 3) |
| A | DE-A-2 701 151 (INDUSTRIE-WERKE KARLSRUHE AUGSBURG)<br>--- | | B 25 J 9/00<br>B 25 J 11/00<br>B 25 J 3/04<br>B 66 C 23/82 |
| A | DE-A-2 630 857 (VOLKSWAGENWERK)<br>--- | | |
| A,P | DE-A-3 007 098 (KLOCKNER WERKE)<br>----- | | |

Der vorliegende Recherchenbericht wurde für alle Patentansprüche erstellt.

| Recherchenort | Abschlußdatum der Recherche | Prüfer |
|---|---|---|
| DEN HAAG | 01-07-1982 | LAMMINEUR P.C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82